# EUROPEAN PATENT APPLICATION

(11) **EP 3 131 226 A1**
(43) Date of publication of application: **15.02.2017**
(21) Application number: 15306295.5
(22) Date of filing: 14.08.2015
(51) Int. Cl.: H04L 5/00, H04L 5/14

(54) **CARRIER AGGREGATION**

(71) Applicant: ALCATEL LUCENT, 92100 Boulogne-Billancourt (FR)
(72) Inventor: NG, Man-Hung, Swindon, Wiltshire SN25 2Js (GB)
(74) Representative: Leppard, Andrew John

(57) **Abstract**

Network nodes and methods for performing carrier aggregation in a wireless telecommunications network are disclosed. The method is for allocating resource blocks to support carrier aggregation communication between network nodes of a wireless telecommunications network and comprises: allocating first uplink resource blocks within at least one uplink band for use by an uplink primary component carrier; and allocating second uplink resource blocks within at least one uplink band for use by at least one uplink secondary component carrier, the first uplink resource blocks allocated for use by the uplink primary component carrier being allocated from resource blocks within the at least one uplink band which are closer to resource blocks within at least one downlink band than the second uplink resource blocks allocated for use by the at least one uplink secondary component carrier.

## Description

### FIELD OF THE INVENTION

The present invention relates to network nodes and methods for performing carrier aggregation in a wireless telecommunications network.

### BACKGROUND

Wireless telecommunications networks are known. In a cellular system, radio coverage is provided to user equipment, for example, mobile telephones, by geographical area. Those geographical areas of radio coverage are known as cells. Abase station is located in each geographical area to provide the required radio coverage and support communication with the user equipment. Abase station may support more than one cell providing coverage in the same geographical area. User equipment in the area served by a base station receives information and data from that base station and transmits information and data to that base station. Information and data transmitted by a base station to user equipment occurs on frequency channels of radio carriers known as downlink carriers. Information and data transmitted by user equipment to a base station occurs on frequency channels of radio carriers known as uplink carriers.

In some implementations carrier aggregation may occur where user equipment may transmit simultaneously on more than one uplink carrier. Furthermore, user equipment may receive simultaneously on more than one downlink carrier. Each carrier, both uplink and downlink, is typically independently power controlled and independently scheduled by a base station. Such networks are known as "multiple component carrier" networks. Multiple component carrier networks may substantially improve end user data throughput.

In a multiple component carrier network, multiple component carriers may be configured for communication between a base station and user equipment on both downlink and/or uplink carriers within downlink and/or uplink frequency bands. Typically any of the downlink component carriers may be used to carry signalling messages comprising uplink transmission resource grants which permit the user equipment to transmit user data on the available uplink component carriers. An uplink grant of network resource sent on a particular downlink component carrier may assign uplink network resources on one specific uplink component carrier according to a default or predetermined correspondence between uplink and downlink component carriers. Alternatively, any given downlink component carrier may assign uplink network resources on any uplink component carrier by means of a component carrier indicator included in the resource allocation message sent from the base station to the user equipment allocating network resource.

Although carrier aggregation provides performance benefits, unexpected consequences can occur.

### SUMMARY

According to a first aspect, there is provided a method of allocating resource blocks to support carrier aggregation communication between network nodes of a wireless telecommunications network, comprising: allocating first uplink resource blocks within at least one uplink band for use by an uplink primary component carrier; and allocating second uplink resource blocks within at least one uplink band for use by at least one uplink secondary component carrier, the first uplink resource blocks allocated for use by the uplink primary component carrier being allocated from resource blocks within the at least one uplink band which are closer to resource blocks within at least one downlink band than the second uplink resource blocks allocated for use by the at least one uplink secondary component carrier.

The first aspect recognizes that a problem with supporting carrier aggregation is that multiple implementations are possible when performing carrier aggregation with more than one uplink carrier. Some of these implementations are more demanding on the performance of the user equipment than others and it is desirable to ensure that reliable communication can occur even with the most demanding implementations. In particular, the uplink configuration for user equipment receiver requirements (reference sensitivity, etc.) for mixed intra- and inter- long-term involution (LTE) carrier aggregation with two uplink and three or four downlink carriers needs to be specified.

Currently, the uplink configuration for user equipment receiver requirements for intra-band contiguous LTE carrier aggregation with two uplink and three downlink carriers are specified in the 3GPP standards (in Table 7.3.1A-1 of TS 36.101), and the uplink configuration for user equipment receiver requirements for inter-band and intra-band non-contiguous LTE carrier aggregation with two uplink and downlink carriers are specified in the 3GPP standards (respectively in Tables 7.3.1A-0f and 7.3.1A-4 of TS 36.101). However, the uplink configuration for user equipment receiver requirements for other LTE carrier aggregation cases with more than one uplink carriers are not specified in the 3GPP standards.

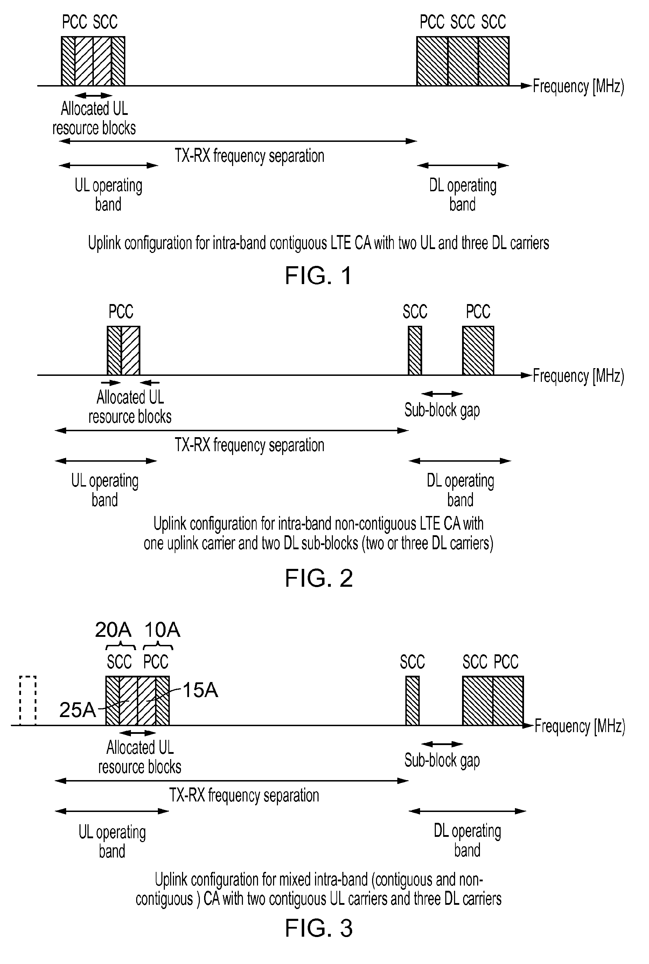

Figure 1 illustrates the uplink configuration for user equipment receiver requirements for intra-band contiguous LTE carrier aggregation with two uplink and three downlink carriers as specified in Clause 7.3.1A of TS 36.101:
1. In case the downlink carrier aggregation configuration has additional secondary component carrier(s) compared to uplink carrier aggregation configuration, those are configured further away from uplink band.
2. The carrier centre frequency of secondary component carrier in the uplink operating band is configured closer to the downlink operating band.
3. The uplink resource blocks in the primary component carrier shall be located as close as possible to the downlink operating band, while the uplink resource blocks in secondary component carrier shall be located as far as possible from the downlink operating band.

Figure 2 illustrates the uplink configuration for user equipment receiver requirements for intra-band non-contiguous LTE carrier aggregation with one uplink carrier and two downlink sub-blocks (two or three downlink carriers) as specified in Clause 7.3.1A of TS 36.101:
1. The carrier centre frequency of primary component carrier in the uplink operating band is configured closer to the downlink operating band.
2. The uplink resource blocks shall be located as close as possible to the downlink operating band, but confined within the transmission band.

It can be seen from the above that in carrier aggregation cases with fewer uplink than downlink carriers, the secondary component carrier uplink is configured closer to the downlink operating band for the intra-band contiguous carrier aggregation, while the primary component carrier uplink is configured closer to the downlink operating band for the intra-band non-contiguous carrier aggregation. Hence, it is an open issue whether the primary component carrier or secondary component carrier uplink shall be configured closer to the downlink operating band for the mixed intra- (contiguous and non-contiguous) and inter-band carrier aggregation with two uplink and three/four downlink carriers.

Accordingly, a method is provided. The method may allocate resource blocks. The allocation of the resource blocks maybe to support carrier aggregation communication.

The communication maybe between network nodes of a wireless telecommunications network. The method may comprise allocating a first group of uplink resource blocks from within one or more uplink bands. The first group of resource blocks may be allocated for use by an uplink primary component carrier. The method may also comprise allocating a second group of uplink resource blocks. The second group of uplink resource blocks may be from within one or more uplink band. The second group of uplink resource blocks may be for use by one or more uplink secondary component carriers. The first group of uplink resource blocks and the second group of uplink resource blocks may be allocated from the resource blocks within the one or more uplink bands so that the first group of uplink resource blocks are allocated from those which are closer to resource blocks within one or more downlink bands than the second group of resource blocks. In this way, the resource blocks used by the uplink primary component carrier are always closer in frequency to the downlink band than the resource blocks allocated to any secondary uplink component carrier. This ensures that the most demanding case for allocation of resource blocks in the uplink is considered due to the proximity of the uplink primary component carrier to the downlink band which maximizes any leakage and any potential cross-coupling from the uplink to the downlink band, which may be tested when checking the performance compliance of the user equipment under this most demanding condition.

In one embodiment, a frequency separation between the first uplink resource blocks allocated for use by the uplink primary component carrier and the resource blocks within the at least one downlink band is less than a frequency separation between the second uplink resource blocks allocated for use by the at least one uplink secondary component carrier and the resource blocks within the at least one downlink band. Accordingly, a difference in the frequency between the uplink primary component carrier and the downlink band may be smaller than difference in the frequency between any uplink secondary component carrier and the downlink band. This ensures that the uplink primary component carrier is nearer in frequency to the downlink band than any uplink secondary component carrier, again to maximize any leakage and any potential cross-coupling from the uplink to the downlink band.

In one embodiment, a centre frequency of the uplink primary component carrier is closer to the at least one downlink band than a centre frequency of the at least one uplink secondary component carrier. Accordingly, the centre frequency of the uplink primary component carrier may be set to be closer to any downlink band than the centre frequency of any secondary component carrier.

In one embodiment, when the carrier aggregation comprises contiguous uplink carrier aggregation, the allocating comprises allocating contiguous first uplink resource blocks and second uplink resource blocks within the at least one uplink band for use by the uplink primary component carrier and the at least one uplink secondary component carrier. Accordingly, when contiguous uplink carrier aggregation is to occur, then the uplink primary component carrier and one or more uplink secondary component carriers maybe allocated from contiguous resource blocks within the one or more uplink bands.

In one embodiment, when the carrier aggregation comprises contiguous uplink carrier aggregation, the allocating comprises allocating resource blocks for transmitting data from the first uplink resource blocks for use by the uplink primary component carrier which are furthest from resource blocks within at least one downlink band. Accordingly, when contiguous uplink carrier aggregation is to occur, resource blocks for transmitting data may be allocated to be those within the first group of resource blocks which are furthest from the one or more downlink bands. That is to say, of all the available resource blocks allocated to the uplink primary component carrier, those which are furthest from the downlink band are first utilized for transmission of data since those furthest from the downlink band will still be contiguous with any uplink secondary component carrier.

In one embodiment, when the carrier aggregation comprises contiguous uplink carrier aggregation, the allocating comprises allocating resource blocks for transmitting data from the second uplink resource blocks for use by the at least one uplink secondary component carrier which are closest to resource blocks within at least one downlink band. Accordingly, when contiguous uplink carrier aggregation is to occur, resource blocks for transmitting data may be allocated to be those within the second group of resource blocks which are closest to the one or more downlink bands. That is to say, of all the available resource blocks allocated to the uplink secondary component carrier, those which are closest to the downlink band are first utilized for transmission of data since those closest to the downlink band will still be contiguous with the primary component carrier.

In one embodiment, when the carrier aggregation comprises non-contiguous uplink carrier aggregation, the allocating comprises allocating non-contiguous first uplink resource blocks and second uplink resource blocks within the at least one uplink band for use by the uplink primary component carrier and the at least one uplink secondary component carrier. Accordingly, when non-contiguous uplink carrier aggregation is to occur, the uplink primary component carrier and any uplink secondary component carriers may be allocated from non-contiguous resource blocks within the one or more uplink bands.

In one embodiment, when the carrier aggregation comprises non-contiguous uplink carrier aggregation, the allocating comprises allocating resource blocks for transmitting data from the first uplink resource blocks for use by the uplink primary component carrier which are closest to resource blocks within at least one downlink band. Since there is no requirement for contiguous resource blocks to be used for transmission by the uplink primary component carrier and any uplink secondary component carriers, those resource blocks of the uplink primary component carrier which are closest to the downlink bands may be used first for transmission in order to maximize any leakage and any potential cross-coupling from the uplink to the downlink band.

In one embodiment, when the carrier aggregation comprises non-contiguous uplink carrier aggregation, the allocating comprises allocating resource blocks for transmitting data from the second uplink resource blocks for use by the at least one uplink secondary component carrier for transmitting data which are closest to resource blocks within at least one downlink band. Since there is no requirement for contiguous resource blocks to be used for transmission by the uplink primary component carrier and any uplink secondary component carriers, those resource blocks of the uplink secondary component carrier which are closest to the downlink bands may be used first for transmission in order to maximize any leakage and any potential cross-coupling from the uplink to the downlink band.

In one embodiment, the method comprises allocating first downlink resource blocks within at least one downlink band for use by a downlink primary component carrier and allocating second downlink resource blocks within at least one downlink band for use by at least one downlink secondary component carrier, the first downlink resource blocks allocated for use by the downlink primary component carrier being allocated from resource blocks within the at least one downlink band which are further from resource blocks within the at least one uplink band than the second downlink resource blocks allocated for use by the at least one downlink secondary component carrier.

In one embodiment, the allocating comprises allocating resource blocks to maintain a constant frequency separation between the uplink primary component carrier and the downlink primary component carrier and between each uplink secondary component carrier and corresponding downlink secondary component carrier. Providing a constant or fixed frequency offset between each uplink and downlink component carriers significantly simplifies the operation of the user equipment.

In one embodiment, the method of allocating may be performed by test equipment or base stations of the wireless telecommunications network. The allocation may be signalled to user equipment of the wireless telecommunications network. Likewise, the method of allocating resource blocks may be performed by user equipment of the wireless telecommunications network in response to such signalling from the test equipment or base stations.

According to a second aspect, there is provided a network node of a wireless telecommunications network, comprising: allocating logic operable to allocate first uplink resource blocks within at least one uplink band for use by an uplink primary component carrier to allocate second uplink resource blocks within at least one uplink band for use by at least one uplink secondary component carrier, the allocating logic being operable to allocate the first uplink resource blocks use by the uplink primary component carrier from resource blocks within the at least one uplink band which are closer to resource blocks within at least one downlink band than the second uplink resource blocks allocated for use by the at least one uplink secondary component carrier.

In one embodiment, a frequency separation between the first uplink resource blocks allocated for use by the uplink primary component carrier and the resource blocks within the at least one downlink band is less than a frequency separation between the second uplink resource blocks allocated for use by the at least one uplink secondary component carrier and the resource blocks within the at least one downlink band.

In one embodiment, a centre frequency of the uplink primary component carrier is closer to the at least one downlink band than a centre frequency of the at least one uplink secondary component carrier.

In one embodiment, when the carrier aggregation comprises contiguous uplink carrier aggregation, the allocating logic is operable to allocate contiguous first uplink resource blocks and second uplink resource blocks within the at least one uplink band for use by the uplink primary component carrier and the at least one uplink secondary component carrier.

In one embodiment, when the carrier aggregation comprises contiguous uplink carrier aggregation, the allocating logic is operable to allocate resource blocks for transmitting data from the first uplink resource blocks for use by the uplink primary component carrier which are furthest from resource blocks within at least one downlink band.

In one embodiment, when the carrier aggregation comprises contiguous uplink carrier aggregation, the allocating logic is operable to allocate resource blocks for transmitting data from the second uplink resource blocks for use by the at least one uplink secondary component carrier which are closest to resource blocks within at least one downlink band.

In one embodiment, when the carrier aggregation comprises non-contiguous uplink carrier aggregation, the allocating logic is operable to allocate non-contiguous first uplink resource blocks and second uplink resource blocks within the at least one uplink band for use by the uplink primary component carrier and the at least one uplink secondary component carrier.

In one embodiment, when the carrier aggregation comprises non-contiguous uplink carrier aggregation, the allocating logic is operable to allocate resource blocks for transmitting data from the first uplink resource blocks for use by the uplink primary component carrier which are closest to resource blocks within at least one downlink band.

In one embodiment, when the carrier aggregation comprises non-contiguous uplink carrier aggregation, the allocating logic is operable to allocate resource blocks for transmitting data from the second uplink resource blocks for use by the at least one uplink secondary component carrier for transmitting data which are closest to resource blocks within at least one downlink band.

In one embodiment, the allocating logic is operable to allocate first downlink resource blocks within at least one downlink band for use by a downlink primary component carrier and to allocate second downlink resource blocks within at least one downlink band for use by at least one downlink secondary component carrier, the first downlink resource blocks allocated for use by the downlink primary component carrier being allocated from resource blocks within the at least one downlink band which are further from resource blocks within the at least one uplink band than the second downlink resource blocks allocated for use by the at least one downlink secondary component carrier.

In one embodiment, the allocating logic is operable to allocate resource blocks to maintain a constant frequency separation between the uplink primary component carrier and the downlink primary component carrier and between each uplink secondary component carrier and corresponding downlink secondary component carrier.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the uplink configuration for user equipment receiver requirements for intra-band contiguous LTE carrier aggregation with two uplink and three downlink carriers as specified in Clause 7.3.1A of TS 36.101;
Figure 2 illustrates the uplink configuration for user equipment receiver requirements for intra-band non-contiguous LTE carrier aggregation with one uplink carrier and two downlink sub-blocks (two or three downlink carriers) as specified in Clause 7.3.1A of TS 36.101;
Figure 3 illustrates resource block allocation for mixed intra-band (contiguous and non-contiguous) carrier aggregation for two contiguous uplink carriers and three downlink carriers;
Figure 4 illustrates resource block allocation for mixed intra-band (contiguous and non-contiguous) carrier aggregation for two contiguous uplink carriers and four downlink carriers;
Figure 5 illustrates resource block allocation for mixed intra-band and inter-band carrier aggregation for two contiguous uplink carriers and three downlink carriers; and
Figure 6 illustrates resource block allocation for mixed intra-band and inter-band carrier aggregation for two non-contiguous uplink carriers and three downlink carriers.

### DESCRIPTION OF THE EMBODIMENTS

Before discussing the embodiments in any more detail, first an overview will be provided. Embodiments recognize that various configurations are possible for mixed intra- (contiguous and non-contiguous) and inter-band carrier aggregation. These configurations have a greater and lesser demand on the performance on the user equipment. In particular, the closer the uplink carriers are to the downlink carriers, the larger the impact is of transmitter leakage on the receiver sensitivity. However, if the user equipment can operate satisfactorily under a more-demanding configuration, then the user equipment should be able to also operate under less-demanding configurations.

These configurations may be instructed by test equipment when testing the performance of the user equipment to ensure that it is able to operate satisfactorily under these more demanding conditions. These configurations may also be instructed by base stations in actual deployments. In particular, for at least two uplink and three, four or more downlink carriers the carrier centre frequency of the primary component carrier in the uplink operating bands is configured to be closer to the downlink operating bands than the uplink secondary component carrier.

For the case of contiguous uplink carriers, in order to form a contiguous uplink allocation, the uplink resource blocks in the uplink primary component carrier are located as far as possible from the downlink operating bands, while the uplink resource blocks in the uplink secondary component carrier are located as close as possible to the downlink operating bands.

For the case of non-contiguous uplink carriers, the uplink resource blocks shall be located as close as possible to the downlink operating bands, but confined within the allocated blocks. If no uplink resource block is allowed without desensitization, the uplink resource allocation is shifted towards the far-off end of the uplink operating bands. It will be appreciated that this arrangement also applies to carrier aggregation cases with two uplink and more than four downlink carriers.

### Mixed Intra-Band (Contiguous and Non-Contiguous) Carrier Aggregation

### Two Contiguous Uplink Carriers and Three Downlink Carriers

Figure 3 illustrates resource block allocation for mixed intra-band (contiguous and non-contiguous) carrier aggregation for two contiguous uplink carriers and three downlink carriers. As can be seen, within the downlink operating band, a downlink primary component carrier and two downlink secondary component carriers are provided. The downlink primary component carrier is contiguous with one of these downlink secondary component carriers, but the other downlink secondary component carrier is non-contiguous.

Within the uplink operating band, resource blocks are allocated to the uplink primary component carrier 10A and to the uplink secondary component carrier 20A. The resource blocks allocated to the uplink primary component carrier 10A and to the uplink secondary component carrier 20A are contiguous within the uplink operating band. From within these resource blocks, resource blocks 15A used for transmission of data within the uplink primary component carrier 10A and resource blocks 25A used for transmitting data within the uplink secondary component carrier 20A are also arranged be contiguous. As can be seen in this arrangement, the resource blocks 15A allocated to the uplink primary component carrier 10A are those within the uplink operating band which are confined within the uplink primary component carrier 10A and further away from the downlink operating band. That is to say, frequency separation between the uplink primary component carriers and the downlink primary component carriers is minimized. However, the resource blocks 25A allocated for any uplink secondary component carrier are selected from resource blocks which are confined within the uplink secondary component carrier 20A and are closest to the downlink operating band.

As can be seen in Figure 3, the frequency separation between the uplink primary component carrier 10A and the downlink primary component carrier is the same as between the uplink secondary component carrier 20A and a downlink secondary component carrier. This constant frequency offset or separation helps to simplify the operation of the user equipment. Should further uplink secondary component carriers need to be added then these would be at added as shown in outline in Figure 3 to retain a constant frequency offset.

### Mixed Intra-Band (Contiguous and Non-Contiguous) Carrier Aggregation

### Two Contiguous Uplink Carriers and Four Downlink Carriers

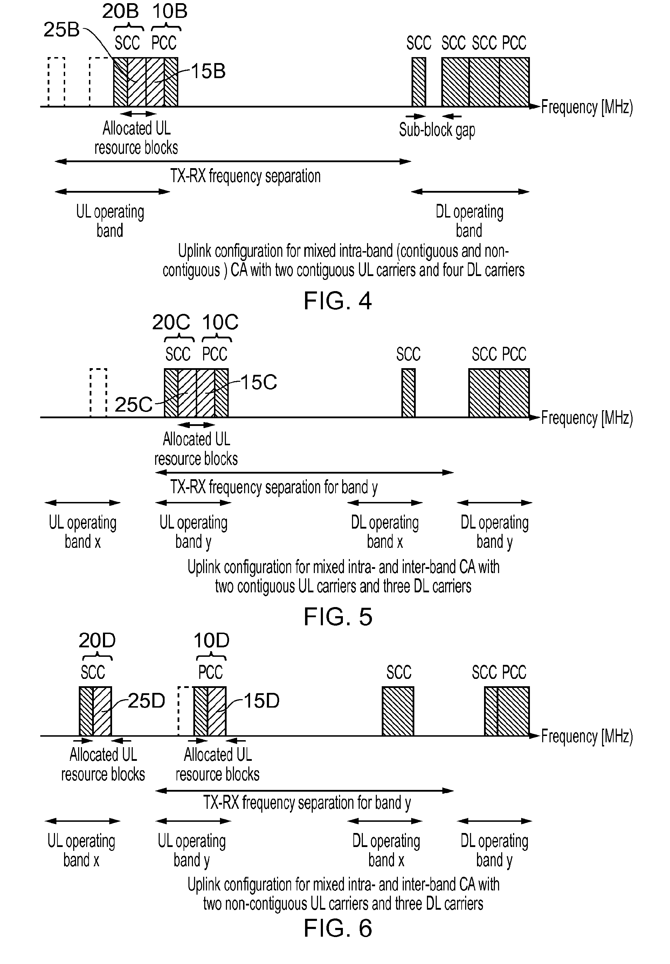

Figure 4 illustrates resource block allocation for mixed intra-band (contiguous and non-contiguous) carrier aggregation for two contiguous uplink carriers and four downlink carriers. As can be seen, within the downlink operating band, a downlink primary component carrier and three downlink secondary component carriers are provided. The downlink primary component carrier is contiguous with two of these downlink secondary component carriers, but the other downlink secondary component carrier is non-contiguous.

Within the uplink operating band, resource blocks are allocated to the uplink primary component carrier 10B and to the uplink secondary component carrier 20B. The resource blocks allocated to the uplink primary component carrier 10B and to the uplink secondary component carrier 20B are contiguous within the uplink operating band. From within these resource blocks, resource blocks 15B used for transmission of data within the uplink primary component carrier 10B and resource blocks 25B used for transmitting data within the uplink secondary component carrier 20B are also arranged be contiguous. As can be seen in this arrangement, the resource blocks 15B allocated to the uplink primary component carrier 10B are those within the uplink operating band which are confined within the uplink primary component carrier 10B and further away from the downlink operating band. That is to say, frequency separation between the uplink primary component carriers and the downlink primary component carriers is minimized. However, the resource blocks 25B allocated for any uplink secondary component carrier are selected from resource blocks which are confined within the uplink secondary component carrier 20B and are closest to the downlink operating band.

As can be seen in Figure 4, the frequency separation between the uplink primary component carrier 10B and the downlink primary component carrier is the same as between the uplink secondary component carrier 20B and a downlink secondary component carrier. This constant frequency offset or separation helps to simplify the operation of the user equipment. Should further uplink secondary component carriers need to be added then these would be at added as shown in outline in Figure 4 to retain a constant frequency offset.

### Mixed Intra-Band and Inter-Band Carrier Aggregation

### Two Contiguous Uplink Carriers and Three Downlink Carriers

Figure 5 illustrates resource block allocation for mixed intra-band and inter-band carrier aggregation for two contiguous uplink carriers and three downlink carriers. As can be seen, within the downlink operating band y, a downlink primary component carrier and a downlink secondary component carriers are provided. The downlink primary component carrier is contiguous with this downlink secondary component carrier, but the other downlink secondary component carrier is non-contiguous and provided within the downlink operating band x.

Within the uplink operating band y, resource blocks are allocated to the uplink primary component carrier 10C and to the uplink secondary component carrier 20C. The resource blocks allocated to the uplink primary component carrier 10C and to the uplink secondary component carrier 20C are contiguous within the uplink operating band. From within these resource blocks, resource blocks 15C used for transmission of data within the uplink primary component carrier 10C and resource blocks 25C used for transmitting data within the uplink secondary component carrier 20C are also arranged be contiguous. As can be seen in this arrangement, the resource blocks 15C allocated to the uplink primary component carrier 10C are those within the uplink operating band which are confined within the uplink primary component carrier 10C and further away from the downlink operating band. That is to say, frequency separation between the uplink primary component carriers and the downlink primary component carriers is minimized. However, the resource blocks 25C allocated for any uplink secondary component carrier are selected from resource blocks which are confined within the uplink secondary component carrier 20C and are closest to the downlink operating bands.

As can be seen in Figure 5, the frequency separation between the uplink primary component carrier 10C and the downlink primary component carrier is the same as between the uplink secondary component carrier 20C and a downlink secondary component carrier. This constant frequency offset or separation helps to simplify the operation of the user equipment. Should further uplink secondary component carriers need to be added then these would be at added in the uplink operating band x as shown in outline in Figure 5 to retain a constant frequency offset.

### Mixed Intra-Band and Inter-Band Carrier Aggregation

### Two Non-Contiguous Uplink Carriers and Three Downlink Carriers

Figure 6 illustrates resource block allocation for mixed intra-band and inter-band carrier aggregation for two non-contiguous uplink carriers and three downlink carriers. As can be seen, within the downlink operating band y, a downlink primary component carrier and a downlink secondary component carriers are provided. The downlink primary component carrier is contiguous with this downlink secondary component carrier, but the other downlink secondary component carrier is non-contiguous and provided within the downlink operating band x.

Within the uplink operating band y, resource blocks are allocated to the uplink primary component carrier 10D. Within the uplink operating band x, resource blocks are allocated to the uplink secondary component carrier 20D. The resource blocks allocated to the uplink primary component carrier 10D and to the uplink secondary component carrier 20D are non-contiguous, within the different uplink operating bands. From within these resource blocks, resource blocks 15D used for transmission of data within the uplink primary component carrier 10D and resource blocks 25D used for transmitting data within the uplink secondary component carrier 20D are also arranged be non-contiguous. As can be seen in this arrangement, the resource blocks 15D allocated to the uplink primary component carrier 10D are those within the uplink operating band which are closest to the downlink operating band. That is to say, frequency separation between the uplink primary component carriers and the downlink primary component carriers is minimized. Also, the resource blocks 25D allocated to the uplink secondary component carrier 20D are those within the uplink operating band which are closest to the downlink operating band. That is to say, frequency separation between these is minimized.

As can be seen in Figure 6, the frequency separation between the uplink primary component carrier 10D and the downlink primary component carrier is the same as between the uplink secondary component carrier 20D and a downlink secondary component carrier. This constant frequency offset or separation helps to simplify the operation of the user equipment. Should further uplink secondary component carriers need to be added then these would be at added in the uplink operating band y as shown in outline in Figure 6 to retain a constant frequency offset.

Accordingly, it can be seen that the uplink configuration for user equipment receiver requirements (reference sensitivity, etc.) for mixed intra- (contiguous and non-contiguous) and inter-band LTE carrier aggregation with two uplink and three or four downlink carriers is specified and presents a more demanding case for the user equipment receiver requirements.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of allocating resource blocks to support carrier aggregation communication between network nodes of a wireless telecommunications network, comprising:
allocating first uplink resource blocks within at least one uplink band for use by an uplink primary component carrier; and
allocating second uplink resource blocks within at least one uplink band for use by at least one uplink secondary component carrier, said first uplink resource blocks allocated for use by said uplink primary component carrier being allocated from resource blocks within said at least one uplink band which are closer to resource blocks within at least one downlink band than said second uplink resource blocks allocated for use by said at least one uplink secondary component carrier.

2. The method of claim 1, wherein a frequency separation between said first uplink resource blocks allocated for use by said uplink primary component carrier and said resource blocks within said at least one downlink band is less than a frequency separation between said second uplink resource blocks allocated for use by said at least one uplink secondary component carrier and said resource blocks within said at least one downlink band.

3. The method of claim 1 or 2, wherein a centre frequency of said uplink primary component carrier is closer to said at least one downlink band than a centre frequency of said at least one uplink secondary component carrier.

4. The method of any preceding claim, wherein when said carrier aggregation comprises contiguous uplink carrier aggregation, said allocating comprises allocating contiguous first uplink resource blocks and second uplink resource blocks within said at least one uplink band for use by said uplink primary component carrier and said at least one uplink secondary component carrier.

5. The method of any preceding claim, wherein when said carrier aggregation comprises contiguous uplink carrier aggregation, said allocating comprises allocating resource blocks for transmitting data from said first uplink resource blocks for use by said uplink primary component carrier which are furthest from resource blocks within at least one downlink band.

6. The method of any preceding claim, wherein when said carrier aggregation comprises contiguous uplink carrier aggregation, said allocating comprises allocating resource blocks for transmitting data from said second uplink resource blocks for use by said at least one uplink secondary component carrier which are closest to resource blocks within at least one downlink band.

7. The method of any preceding claim, wherein when said carrier aggregation comprises non-contiguous uplink carrier aggregation, said allocating comprises allocating non-contiguous first uplink resource blocks and second uplink resource blocks within said at least one uplink band for use by said uplink primary component carrier and said at least one uplink secondary component carrier.

8. The method of any preceding claim, wherein when said carrier aggregation comprises non-contiguous uplink carrier aggregation, said allocating comprises allocating resource blocks for transmitting data from said first uplink resource blocks for use by said uplink primary component carrier which are closest to resource blocks within at least one downlink band.

9. The method of any preceding claim, wherein when said carrier aggregation comprises non-contiguous uplink carrier aggregation, said allocating comprises allocating resource blocks for transmitting data from said second uplink resource blocks for use by said at least one uplink secondary component carrier for transmitting data which are closest to resource blocks within at least one downlink band.

10. The method of any preceding claim, comprising allocating first downlink resource blocks within at least one downlink band for use by a downlink primary component carrier and allocating second downlink resource blocks within at least one downlink band for use by at least one downlink secondary component carrier, said first downlink resource blocks allocated for use by said downlink primary component carrier being allocated from resource blocks within said at least one downlink band which are further from resource blocks within said at least one uplink band than said second downlink resource blocks allocated for use by said at least one downlink secondary component carrier.

11. The method of any preceding claim, wherein said allocating comprises allocating resource blocks to maintain a constant frequency separation between said uplink primary component carrier and said downlink primary component carrier and between each uplink secondary component carrier and corresponding downlink secondary component carrier.

12. A network node of a wireless telecommunications network, comprising:
allocating logic operable to allocate first uplink resource blocks within at least one uplink band for use by an uplink primary component carrier to allocate second uplink resource blocks within at least one uplink band for use by at least one uplink secondary component carrier, said allocating logic being operable to allocate said first uplink resource blocks use by said uplink primary component carrier from resource blocks within said at least one uplink band which are closer to resource blocks within at least one downlink band than said second uplink resource blocks allocated for use by said at least one uplink secondary component carrier.

13. A computer program product operable, when executed on a computer, to perform the method steps of any one of claims 1 to 11.

## Amended claims

### Amended claims in accordance with Rule 137(2) EPC.

1. A method of allocating resource blocks to support carrier aggregation communication between network nodes of a wireless telecommunications network, comprising:
allocating first uplink resource blocks (15A-D) within at least one uplink band for use by an uplink primary component carrier (10A-D); and
allocating second uplink resource blocks (25A-D) within at least one uplink band for use by at least one uplink secondary component carrier (20A-D), said first uplink resource blocks allocated for use by said uplink primary component carrier being allocated from resource blocks within said at least one uplink band which are closer to resource blocks within at least one downlink band than said second uplink resource blocks allocated for use by said at least one uplink secondary component carrier.

2. The method of claim 1, wherein a frequency separation between said first uplink resource blocks allocated for use by said uplink primary component carrier and said resource blocks within said at least one downlink band is less than a frequency separation between said second uplink resource blocks allocated for use by said at least one uplink secondary component carrier and said resource blocks within said at least one downlink band.

3. The method of claim 1 or 2, wherein a centre frequency of said uplink primary component carrier is closer to said at least one downlink band than a centre frequency of said at least one uplink secondary component carrier.

4. The method of any preceding claim, wherein when said carrier aggregation comprises contiguous uplink carrier aggregation, said allocating comprises allocating contiguous first uplink resource blocks and second uplink resource blocks within said at least one uplink band for use by said uplink primary component carrier and said at least one uplink secondary component carrier.

5. The method of any preceding claim, wherein when said carrier aggregation comprises contiguous uplink carrier aggregation, said allocating comprises allocating resource blocks for transmitting data from said first uplink resource blocks for use by said uplink primary component carrier which are furthest from resource blocks within at least one downlink band.

6. The method of any preceding claim, wherein when said carrier aggregation comprises contiguous uplink carrier aggregation, said allocating comprises allocating resource blocks for transmitting data from said second uplink resource blocks for use by said at least one uplink secondary component carrier which are closest to resource blocks within at least one downlink band.

7. The method of any preceding claim, wherein when said carrier aggregation comprises non-contiguous uplink carrier aggregation, said allocating comprises allocating non-contiguous first uplink resource blocks and second uplink resource blocks within said at least one uplink band for use by said uplink primary component carrier and said at least one uplink secondary component carrier.

8. The method of any preceding claim, wherein when said carrier aggregation comprises non-contiguous uplink carrier aggregation, said allocating comprises allocating resource blocks for transmitting data from said first uplink resource blocks for use by said uplink primary component carrier which are closest to resource blocks within at least one downlink band.

9. The method of any preceding claim, wherein when said carrier aggregation comprises non-contiguous uplink carrier aggregation, said allocating comprises allocating resource blocks for transmitting data from said second uplink resource blocks for use by said at least one uplink secondary component carrier for transmitting data which are closest to resource blocks within at least one downlink band.

10. The method of any preceding claim, comprising allocating first downlink resource blocks within at least one downlink band for use by a downlink primary component carrier and allocating second downlink resource blocks within at least one downlink band for use by at least one downlink secondary component carrier, said first downlink resource blocks allocated for use by said downlink primary component carrier being allocated from resource blocks within said at least one downlink band which are further from resource blocks within said at least one uplink band than said second downlink resource blocks allocated for use by said at least one downlink secondary component carrier.

11. The method of any preceding claim, wherein said allocating comprises allocating resource blocks to maintain a constant frequency separation between said uplink primary component carrier and said downlink primary component carrier and between each uplink secondary component carrier and corresponding downlink secondary component carrier.

12. A network node of a wireless telecommunications network, comprising:
allocating logic operable to allocate first uplink resource blocks (15A-D) within at least one uplink band for use by an uplink primary component carrier (10A-D) to allocate second uplink resource blocks (25A-D) within at least one uplink band for use by at least one uplink secondary component carrier (20A-D), said allocating logic being operable to allocate said first uplink resource blocks use by said uplink primary component carrier from resource blocks within said at least one uplink band which are closer to resource blocks within at least one downlink band than said second uplink resource blocks allocated for use by said at least one uplink secondary component carrier.

13. A computer program product operable, when executed on a computer, to perform the method steps of any one of claims 1 to 11.
